# EUROPÄISCHE PATENTSCHRIFT

(11) **EP 2 003 048 B1**
(45) Veröffentlichungstag und Bekanntmachung des Hinweises auf die Patenterteilung: **20.02.2013**
(21) Anmeldenummer: 08003994.4
(22) Anmeldetag: 04.03.2008
(51) Int. Cl.: B62J 13/00

(54) **Flexibler Kettenschutz**
Flexible chain guard
Protection de chaîne flexible

(30) Priorität: 15.06.2007 DE 102007028271
(43) Veröffentlichungstag der Anmeldung: 17.12.2008
(73) Patentinhaber: Hebie GmbH & Co.KG, 33617 Bielefeld (DE)
(72) Erfinder: Kobzan, Michael, 14052 Berlin (DE); Michel, Klaus, 33818 Leopoldshöhe (DE)
(74) Vertreter: Grünecker, Kinkeldey, Stockmair & Schwanhäusser

(56) Entgegenhaltungen:
- EP-A1- 1 623 916
- CH-A- 179 633
- DE-A1- 3 629 463
- US-A- 4 054 063

## Beschreibung

Die Erfindung betrifft einen Kettenschutz für ein Fahrrad mit einem Antriebsritzel und einer das Antriebsritzel wenigstens teilweise umschlingenden Kette, wobei der Kettenschutz stationär gegenüber dem Fahrrad und schwimmend sowie selbsthaltend auf der Kette und/oder dem Antriebsritzel anbringbar ausgestaltet ist und wenigstens einen das Antriebsritzel wenigstens teilweise umgebenden Ritzelschutz und wenigstens einen, wenigstens ein Kettentrumm umgebenden und mit dem Ritzelschutz verbundenen Trummschutz aufweist.

Ein derartiger Kettenschutz mit den Merkmalen des Oberbegriffes des Anspruchs 1 ist aus dem Ausführungsbeispiel der Fig. 7 bis 12 der EP 1 623 916 A1 bekannt. Dieser Kettenschutz ist jedoch insofern nachteilig, als er ausschließlich für ein Fahrrad mit einem einzelnen Abtriebsritzel konzipiert ist und damit lediglich bei Fahrrädern mit einem einzigen Gang oder einer Nabenschaltung, aber nicht bei Fahrrädern mit einer Kettenschaltung, also mehreren koaxial angeordneten Zahnkränzen unterschiedlichen Durchmessers, zwischen denen die Kette durch ein Schaltwerk umgeschaltet wird, verwendet werden kann.

Der Kettenschutz der DE 1 03 18 290 A1 ist ebenfalls nicht für Fahrräder mit einer Kettenschaltung geeignet, da beim Umschalten der Kette der Ritzelschutz bei dieser Ausführungsform abfällt. Zudem fehlt der im praktischen Einsatz wichtige Trummschutz, der Hosenbeine vor Verschmutzung schützt.

In der DE 36 29 463 A1 ist eine Reihe von Ausführungsformen eines Kettenschutzes beschrieben, die allesamt auf dem Prinzip beruhen, den Kettenschutz durch Federdruck in der Anlage gegen die Kette zu halten. Der Kettenschutz der DE 36 29 463 A1 ist allein schon deswegen nachteilig, weil durch den Federdruck des Kettenschutzes gegen die Kette eine hohe Reibung an der Kette entsteht. Zwar ist die Ausführungsform der Fig. 11 und 12 der DE 36 29 463 A1 für den Einsatz bei Fahrrädern mit Kettenschaltungen konzipiert, sie ist allerdings nicht selbsthaltend, sondern benötigt zur Halterung auf dem Fahrradrahmen eine federnde Verbindung mit dem Fahrradrahmen in der Nähe des Zahnkranzes. Damit der Kettenschutz der Kette beim Schalten über die verschiedenen Zahnkränze folgen kann und nicht von der Kette abspringt, ist eine besonders hohe Federspannung des Kettenschutzes im Bereich der Trumme notwendig. Dies erhöht wiederum die Reibung unnötig. Schließlich ist ein großer Teil des Antriebsritzels bei dieser Ausführungsform frei und ungeschützt. Somit können bei diesem Kettenschutz Hosenbeine oder Schnürsenkel zwischen das Antriebsritzel ritzel und die Kette eingezogen werden. Die übrigen Ausführungsformen der DE 36 29 463 A1 sind ausschließlich für Fahrräder mit einem einzelnen Antriebsritzel gedacht. Insbesondere die Ausführungsform der Fig. 14a bis 16 ist für Kettenschaltungen ungeeignet, da sie den axialen, seitlichen Bewegungen der Kette über die Ritzel nicht folgen kann.

Der Kettenschutz der CH 179 633 A1 kann an jeder Art von Fahrzeug angebracht werden. Bei diesem Kettenschutz handelt es sich jedoch um eine nicht gattungsgemäße Umhüllung der Kette aus Gummi, die mit der Kette umläuft und nicht gegenüber dem Fahrrad stationär ist. Ein Ritzelschutz ist nicht vorhanden.

Der Kettenschutz der GB 40 57 A1 wird an der Buchse des Pedallagers aufwändig befestigt, ist also nicht schwimmend und selbsthaltend auf der Kette und/oder dem Antriebsritzel befestigt. Die FR 968 995 A1 und die DE 93 621 A1 zeigen beide ebenfalls einen Kettenschutz, der am Fahrradrahmen befestigt wird. Ein am Fahrradrahmen befestigter Kettenschutz ist insofern nachteilig, als nach längerem Gebrauch oder bei Stößen gegen den Kettenschutz die Befestigung abbrechen kann, wodurch der gesamte Kettenschutz unbrauchbar wird.

Die US 4,054,063 A betrifft einen Kettenschutz für Fahrräder mit einem einzigen Kettenblatt und einem Ritzelpaket mit entsprechendem Schaltwerk. Der Kettenschutz umfasst einen Zahnradschutz für das Kettenblatt sowie einen oberen und einen unteren Trumschutz, die mit dem Zahnradschutz verbunden sind. Der obere Kettenschutz ist starr mit dem Zahnradschutz verbunden. Der untere Kettenschutz ist über ein Gelenk mit dem Zahnradschutz verbunden, das horizontale und vertikale Querbewegungen des unteren Trumschutzes ermöglicht.

In Anbetracht der obigen Nachteile des Standes der Technik liegt der Erfindung folglich die Aufgabe zugrunde, einen schwimmend sowie selbsthaltend auf Antriebsritzel und/oder Kette gehaltenen Kettenschutz zu schaffen, der bei einfacher Montage und geringer Reibung an einem Fahrrad mit Kettenschaltung verwendet werden kann und der Benutzer zuverlässig vor Verschmutzungen durch die Kette schützt.

Diese Aufgabe wird erfindungsgemäß für einen Kettenschutz der eingangs genannten Art dadurch gelöst, dass im Übergangsbereich von Trummschutz und Ritzelschutz eine Bewegungszone vorgesehen ist, deren Auslenkbarkeit gegenüber einer Bewegung der Kette quer zur Kettenrichtung größer ist als die Auslenkbarkeit des Trummschutzes.

Unter Auslenkbarkeit ist dabei der Widerstand gegen eine Verformung oder Lageänderung zu verstehen, der einer Kraft entgegengesetzt ist. Durch die an sich einfache erfindungsgemäße Lösung wird erreicht, dass sich beim Schalten die Verformung des Kettenschutzes in der Bewegungszone konzentriert, so dass der Trummschutz im Wesentlichen verformungsfrei und damit ohne Kraftausübung auf die Kette der Bewegung der Kette folgen kann. In dieser Ausgestaltung unterscheidet sich der erfindungsgemäße Kettenschutz insbesondere vom Kettenschutz der DE 36 29 463 A1, bei dem Auslenkbarkeit über den gesamten Kettenschutz gleich verteilt ist und sich bei einer Bewegung der Kette aufgrund der Vorspannung durch die Federn stets der gesamte Kettenschutz verformt. Die Reibungskräfte zwischen Kettenschutz und Kette erhöhen sich, je größer der Zahnkranz ist, um den die Kette läuft. Der Kettenschutz der EP 1 623 916 A1 dagegen ist gerade in dem für die Kettenschaltung kritischen Übergangsbereich verstärkt, so dass eine Bewegungszone fehlt und der Trummschutz der Schaltbewegung der Kette nicht folgen kann.

Im Folgenden sind weitere Ausgestaltungen der erfindungsgemäßen Lösung beschrieben, die jeweils für sich betrachtet vorteilhaft sind und beliebig miteinander kombiniert werden können, je nachdem, welche Vorteile gerade für eine bestimmte Anwendung benötigt werden.

So können insbesondere der Trummschutz und der Ritzelschutz in der Bewegungszone gelenkig miteinander verbunden sein. Eine solche gelenkige Verbindung ermöglicht insbesondere eine Relativbewegung des Trummschutzes gegenüber dem Ritzelschutz, ohne dass es zu elastischen Rückstellkräften kommt. Dies stellt eine besonders niedrige Reibung zwischen Kettenschutz und Kette in allen Gängen sicher. In weiteren Varianten kann die gelenkige Verbindung bei einstückig über eine Materialbrücke verbundenen Trummschutz und Ritzelschutz durch einen balgförmigen Abschnitt niedriger Wandstärke erreicht werden, der die Relativbewegungen zwischen Trummschutz und Antriebsritzel ausgleicht und gleichzeitig eine staubdichte Verbindung zwischen Trummschutz und Ritzelschutz ermöglicht. Eine solche Materialbrücke kann beispielsweise im Spritzguss- oder im Koextrusionsverfahren zusammen mit wenigstens einem Abschnitt des Trummschutzes und des Ritzelschutzes hergestellt werden. Die Materialbrücke kann ferner aus einem Material, das leichter auslenkbar ist, als Trumm- und Ritzelschutz gefertigt sein. In einer besonders einfachen Ausgestaltung kann die Auslenkbarkeit in der Bewegungszone auch einfach dadurch erhöht werden, dass lediglich die Wandstärke in diesem Bereich verringert ist. In einer weiteren Variante können der Trummschutz und der Ritzelschutz als separate Bauteile ausgestaltet sein, die ineinander greifende, ein Gelenk bildende Formschlusselemente, beispielsweise wenigstens einen in eine Öffnung eingesteckten Zapfen aufweist.

Die beiden Stellen, an denen die Kette auf das Antriebsritzel aufläuft, bleiben bei der Drehung des Antriebsritzels in ihrer Lage im Wesentlichen unverändert. Von diesen Stellen verläuft die Kette in den verschiedenen Gängen stets geradlinig zu den Zahnkränzen. Folglich ist es von Vorteil, wenn die Bewegungszone im Bereich dieser Stellen angeordnet ist, da sie die Drehpunkte für die Bewegung der Kettentrumme beim Schaltvorgang bilden. Ferner kann die Auslenkbarkeit des Ritzelschutzes gegenüber der Auslenkbarkeit der Bewegungszone stark verringert sein.

In einer weiteren vorteilhaften Ausgestaltung kann der Trummschutz in etwa tangential in den Ritzelschutz münden. Wenn in einer Weiterbildung die äußere Umfangsfläche des Ritzelschutzes und die äußere Abdeckfläche des Trummschutzes im Wesentlichen sprung-und/oder stufenfrei ineinander übergehen, wird vermieden, dass sich im Laufe des Betriebs an der Außenseite oder der Innenseite des Kettenschutzes im Bereich der Stufen oder Vorsprünge Verschmutzungen ansammeln können, welche beispielsweise die Hosenbeine eines Benutzers verunreinigen. Außerdem ist der Kettenschutz bei einer außen glatten Formgebung leichter zu reinigen.

Die Innenquerschnitte von Trummschutz und Ritzelschutz können in der Bewegungszone vorzugsweise im Wesentlichen stoßfrei und ohne Querschnittssprung ineinander übergehen. So kann vermieden werden, dass Verschmutzungen an der Stelle eines Querschnittssprunges oder einer Querschnittsverengung von der Kette gleichsam abgekratzt werden, sich dort ansammeln und den Bewegungswiderstand der Kette erhöhen. Um den Verschleiß und die Lärmentwicklung beim Einlaufen der Kette in den Trummschutz zu verringern, kann dieser sich in Richtung weg vom Ritzelschutz in einem Endbereich im Wesentlichen trichterförmig erweitern. Die Erweiterung kann sowohl in der Ebene des Antriebsritzels als auch quer davon ausgebildet sein.

Sind der Trummschutz und der Ritzelschutz aus separaten Teilen gefertigt, so ist von Vorteil, wenn der Trummschutz im Übergangsbereich den Ritzelschutz überlappt, so dass offene Spalten vermieden werden und der Kettenschutz im Übergangsbereich zwischen Trummschutz und Ritzelschutz abgedichtet ist.

Eine einfache Montage auf dem Antriebsritzel ist ohne vorheriges Entfernen der Kette möglich, wenn in einer weiteren vorteilhaften Ausgestaltung der Ritzelschutz wenigstens aus zwei im Wesentlichen axial zusammensteckbaren Halbschalen zusammengesetzt ist. Die Halbschalen können insbesondere kreisringförmig sein. Durch die Kreisringform ist sichergestellt, dass auch der Bereich des Antriebsritzels zwischen den beiden Kettentrummen, der von der Kette nicht umschlungen ist und in dem die Zähne des Antriebsritzels freistehen, vom Ritzelschutz umschlossen ist. Die Halbschalen können insbesondere einen im Wesentlichen U-förmigen Querschnitt mit zwei Schenkeln aufweisen, wobei der eine, in radialer Richtung äußere Schenkel, der das Antriebsritzel außen umgreift, länger ist als der andere, zu einer Seitenfläche des Antriebsritzels hin weisende innere Schenkel.

Bei Fahrrädern, bei denen die Kettenstrebe und das Sitzrohr nahe am Antriebsritzel liegen, steht nur wenig Platz für einen Kettenschutz zur Verfügung. Um in solchen Fällen die Montage des Kettenschutzes zu ermöglichen, kann der Ritzelschutz in seiner zum Sitzrohr und/oder zur Kettenstrebe gerichteten Seitenfläche eine das Sitzrohr und/oder die Kettenstrebe aufnehmende Einbuchtung aufweisen. Vorzugsweise ist dabei im montierten Zustand der Kettenschutz vom Sitzrohr und/oder der Kettenstrebe beabstandet, so dass die selbsthaltende und selbstzentrierende Lagerung auf der Kette nicht beeinflusst wird.

Der Trummschutz kann zu Montagezwecken ebenfalls wenigstens aus zwei in axialer Richtung des Antriebsritzels zusammensetzbaren Halbschalen bestehen, so dass er auf die montierte Kette aufgebracht werden kann. Die Halbschalen des Trummschutzes können insbesondere einen U-förmigen Querschnitt mit zwei Schenkeln aufweisen, wobei sich die Schenkel im zusammengesteckten Zustand überlappen und den Trummschutz so versteifen. Der Trummschutz erstreckt sich vorzugsweise über wenigstens drei Viertel der Länge des jeweiligen Trummes, um einen ausreichenden Schutz zu gewährleisten.

Die Halbschalen des Trummschutzes können durch miteinander in Eingriff bringbare Formschlusselemente in Laufrichtung der Kette verschiebegesichert zusammensetzbar ausgestaltet sein. Insbesondere können die Formschlusselemente sicherstellen, dass die beiden Halbschalen exakt zueinander ausgerichtet sind. Die Formschlusselemente können als Rippen oder Zapfen, die mit entsprechend komplementären Aussparungen bzw. Aufnahmen in Eingriff bringbar sind, ausgestaltet sein. Der wenigstens eine Trummschutz und der Ritzelschutz können auch als einteilige Halbschalen ausgeführt sein, die in axialer Richtung zusammengesetzt sind und in die jeweils eine den wenigstens einen Trummschutz und den Ritzelschutz bildende Halbschale integriert ist. Insbesondere können die Halbschalen durch ein Zweikomponenten-Spritzverfahren hergestellt werden, so dass sie zwei verschiedene Kunststoffe unterschiedlicher Härte umfassen. Beispielsweise wird in einem ersten Arbeitsschritt die im montierten Zustand den Ritzelschutz bildende Halbschale aus einem steiferen Kunststoff gespritzt. In einem zweiten Arbeitsgang wird dann die wenigstens eine im montierten Zustand den Trummschutz bildende Halbschale an den Ritzelschutz angespritzt. Der im zweiten Arbeitsgang verwendete Kunststoff unterscheidet sich dabei von dem im ersten Arbeitsgang verwendeten Kunststoff und ist insbesondere biegsamer, weist also eine höhere Auslenkbarkeit auf.

Das modulare Prinzip bleibt auch bei der Fertigung mittels Zweikomponentenspritzen erhalten, da ausgehend von einem immer gleichen Ritzelschutz unterschiedliche Trummschützer angespritzt werden. Der Vorteil des in eine Halbschale integrierten Ritzel- und Trummschutzes besteht in einer einfacheren Montage und in einer stabileren Konstruktion.

Um das Kettentrumm optimal zu schützen, kann in einer weiteren vorteilhaften Ausgestaltung der Trummschutz einen quer zur Laufrichtung der Kette geschlossenen Kanal bilden.

Der Ritzelschutz kann im Bereich der Umschlingung des Antriebsritzels durch die Kette wenigstens zwei einander axial in etwa gegenüberliegende Versteifungs- und Führungsstege aufweisen, die sich entlang wenigstens eines Kreissegmentes auf der Höhe des mittleren Radius der Kette auf dem Antriebsritzel befinden. Diese Stege versteifen einerseits den Ritzelschutz gegen eine Biege- und Torsionsverformung, die bei einer Auslenkung des Trummschutzes über die Bewegungszone in den Ritzelschutz eingeleitet werden kann. Andererseits positionieren sie den Ritzelschutz exakt auf dem Antriebsritzel und verbessern die schwimmende und selbstzentrierende Lagerung auf dem Antriebsritzel. Insbesondere wird durch die Versteifungs- und Führungsstege vermieden, dass der Ritzelschutz vollflachig am Ritzel anliegen kann. Dies führt überraschend besonders bei Regen zu einer erheblichen Geräuschverminderung. Die Höhe des Versteifungs- und Führungssteges kann insbesondere weniger als einen Millimeter betragen.

Der Ritzelschutz kann an seiner Inneren Umfangsfläche ferner einen radialen Ringspalt aufweisen, dessen Breite größer als die axiale Breite des Antriebsritzels und kleiner als die axiale Breite der Kette ist und der von sich in axialer Richtung zum Ringspalt hin verjüngenden Dichtlippen des Ritzelschutzes begrenzt ist. Im Betrieb ragt das Antriebsritzel durch den Ringspalt in den vom Ritzelschutz umschlossenen Innenraum hinein. Durch die erfindungsgemäße Bemessung und Ausgestaltung der radialen Öffnung entsteht an der inneren Umfangsfläche des Ritzelschutzes eine mit der Seitenwand des Antriebsritzels zusammenwirkende Dichtung, die das Eindringen und die Anlagerung von Schmutz am Ringspalt verhindert. Insbesondere die Verjüngung der Dichtlippen hat zur Folge, dass sich keine Verschmutzungen zwischen Antriebsritzel und Kettenschutz ansammeln können, welche bei langer Betriebsdauer den Kettenschutz und das Antriebsritzel aufgrund der zwischen ihnen herrschenden Relativdrehung verschleißen können. Bevorzugt laufen die Dichtlippen zum Antriebsritzel geradlinig spitz zu, so dass sie im Querschnitt eine Dreiecksform aufweisen. Um die Flexibilität und damit die Auslenkbarkeit des Übergangsbereichs ausreichend hoch zu halten, kann der Trummschutz eine Shore-Härte im Bereich von etwa 70 Shore A bis etwa 80 Shore A aufweisen. Eine Härte in diesem Bereich führt zudem zu einer erheblich reduzierten Geräuschentwicklung im Betrieb.

Beim Ritzelschutz ist es von Vorteil, wenn dieser aus steiferem Material besteht als der Trummschutz. Insbesondere eine Shore-Härte im Bereich von etwa 40 Shore D bis etwa 50 Shore D hat sich als günstig erwiesen, weil dadurch die vom Übergangsbereich in den Ritzelschutz eingeleiteten Biegespannungen ohne starke Verformung aufgenommen werden.

Vorteilhaft ist ferner, wenn ein zweiter Trummschutz vorgesehen ist, der identisch zum ersten Trummschutz ausgestaltet ist. Der eine Trummschutz kann bei dieser Ausgestaltung dem Lasttrumm und der andere dem Leertrumm der Antriebskette zugeordnet sein.

Ein Vorteil des Kettenschutzes liegt darin, dass er ohne Federvorspannung und damit mit nur geringen Kräften auf der Kette und/oder dem Antriebsritzel gehalten ist.

Im Folgenden wird die Erfindung anhand einer Ausführungsform beispielhaft mit Bezug auf die Figuren erläutert.

Es zeigen:
- Fig. 1: eine schematische Perspektivdarstellung einer Ausführungsform des erfindungsgemäßen Kettenschutzes;
- Fig. 2: eine schematische Explosionsdarstellung in perspektivischer Ansicht der Ausführungsform der Fig. 1;
- Fig. 3: eine schematische Seitenansicht der Ausführungsform der Fig. 1 in verschiedenen Schaltpositionen einer Kettenschaltung;
- Fig. 4: eine Draufsicht auf die in der Fig. 3 dargestellte Konfiguration;
- Fig. 5: eine schematische Explosionsdarstellung in perspektivischer Ansicht einer weiteren Ausführungsform eines erfindungsgemäßen Kettenschutzes.

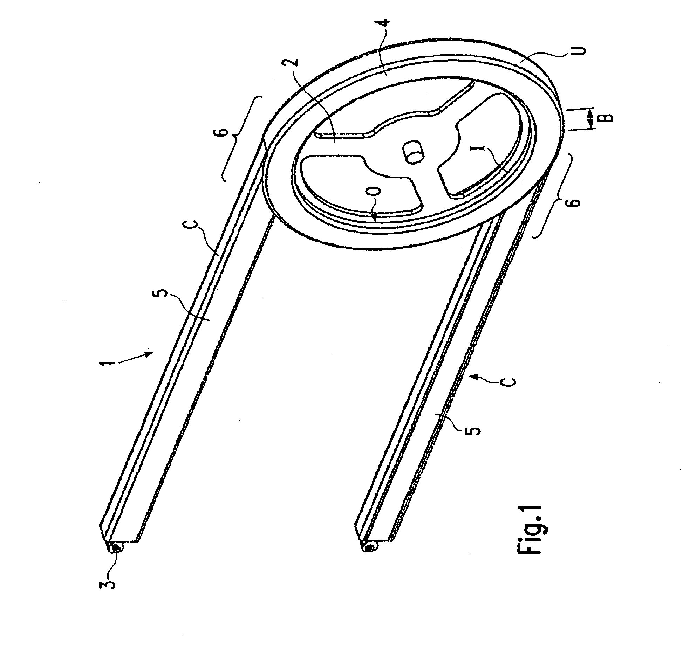

Zunächst wird der Aufbau eines erfindungsgemäßen Kettenschutzes 1 mit Bezug auf die schematische Perspektivdarstellung der Fig. 1 erläutert, in der neben dem Kettenschutz 1 auch das Antriebsritzel 2 und die Kette 3, aus Gründen der Übersichtlichkeit jedoch nicht die Kettenschaltung oder andere Elemente des Fahrrads dargestellt sind.

Der Kettenschutz 1 weist einen das Antriebsritzel umschließenden Ritzelschutz 4 und wenigstens einen Trummschutz 5 auf, der ein Kettentrumm umschließt. Der Ritzelschutz 4 und der Trummschutz 5 sind in einem Übergangsbereich 6 miteinander verbunden. Beide umschließen die Kette in Querrichtung der Kette vollständig. Wie in Fig. 1 dargestellt ist, können auch zwei identische Trummschutze 5, nämlich ein oberer und ein unterer Trummschutz 5, vorgesehen sein.

Die Verbindung kann materialschlüssig und einstückig erfolgen, oder aber der Trummschutz 5 und der Ritzelschutz 4 sind separate, miteinander verbundene Teile. Sowohl der Trummschutz 5 als auch der Ritzelschutz 4 können aus weiteren Teilen zusammengesetzt sein.

Der Ritzelschutz 4 weist eine radial nach außen weisende, äußere Umfangsfläche U in Form einer Mantelfläche eines Kreiszylinders und eine Innenumfangsfläche I auf, die mit einem Ringspalt O versehen ist und ebenfalls die Form der Mantelfläche eines Kreiszylinders hat. Durch den Ringspalt O ragt das Antriebsritzel 2 in den Innenraum des Ritzelschutzes 4.

Die äußere Umfangsfläche U setzt sich vorzugsweise weitgehend stoßfrei und/oder tangential in Außenflächen C des Trummschutzes 5 fort.

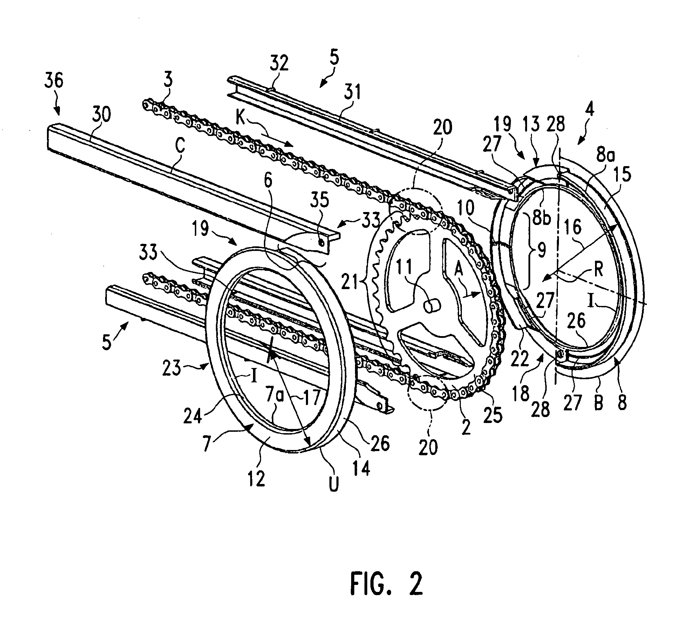

Die schematische Explosionsdarstellung der Fig. 2 zeigt den Aufbau des Ritzelschutzes 4 und des Trummschutzes 5.

Der Ritzelschutz 4 umfasst zwei in axialer Richtung A zusammensteckbare, kreisringförmige Halbschalen 7, 8, wobei die eine, innere, Halbschale 8 dem nicht gezeigten Rahmen eines Fahrrades zugewandt ist. Bei der Ausführungsform der Fig. 2 weist die Halbschale 8 Im Bereich der Kettenstrebe des Fahrrads (nicht gezeigt) eine axiale Einbuchtung 9 auf, in deren Bereich die axiale Breite B (vgl. Fig. 1) des Ritzelschutzes 4 verringert ist. Eine ebensolche Einbuchtung (nicht gezeigt) kann auch für das Sitzrohr des Fahrrads vorgesehen sein. Aufgrund der Einbuchtung 9 kann der Ritzelschutz 4 auch auf Antriebsritzeln 2 montiert werden, die nur wenig beabstandet von der Kettenstrebe und/oder dem Sitzrohr sind.

In einem axialen Querschnitt sind die beiden Halbschalen 7, 8 U-förmig oder in etwa U-förmig, wobei der der äußeren Umfangsfläche U zugeordnete Schenkel 8a länger ist als der der inneren Umfangsfläche I zugeordnete Schenkel 8b. Die eine Halbschale, bei der Ausführungsform der Fig. 2 ist dies beispielsweise die innere Halbschale 8, kann einen kleineren Außendurchmesser aufweisen und in die andere, äußere, Halbschale 7 eingesteckt und von dieser aufgenommen sein. Um Fertigungstoleranzen auszugleichen und eine federnde Aufnahme der kleineren Halbschale 8 in der größeren Halbschale 7 zu ermöglichen, kann an einer Stelle der kleineren Halbschale 8 ein Trennspalt 10 vorgesehen sein, der sich in radialer Richtung R vorzugsweise geradlinig durch den gesamten Querschnitt der Halbschale 8 erstreckt. Wie in Fig. 2 zu erkennen ist, liegt der Trennspalt 10 in horizontaler Richtung auf der Höhe der Achse 11 des Antriebsritzels 2. Der Trennspalt 10 ermöglicht es, den Au-ßenumfang der kleineren, Halbschale 8 elastisch zu verkleinern, so dass sie unter Vorspannung in die größere Halbschale 7 eingesetzt werden kann. Die größere Halbschale 7 weist ebenso wie die kleinere Halbschale 8 einen U-förmigen Querschnitt mit zwei Schenkeln 7a, 7b auf.

Um das Eindringen von Verschmutzungen zu vermeiden, kann am Trennspalt 10 beispielsweise eine Labyrinthdichtung in Form von zwei sich in axialer Richtung überlappenden Vorsprüngen, die zusammen die Wandstärke der Halbschale 8 in axialer Richtung nicht überschreiten sollten, ausgebildet sein. Selbstverständlich kann der Trennspalt 10 auch an der größeren Halbschale 7 angebracht sein.

In einem kreissegmentförmigen Umschlingungsbereich B, in dem die Kette 3 das Antriebsritzel 2 umschlingt, ist jede der Halbschalen 7, 8 jeweils mit einer seitlichen, kreisringförmigen und in axialer Richtung weisenden Seitenschutzwand 12, 13 und mit einer in axialer Richtung zum Antriebsritzel 2 vorspringenden, kreissegmentförmigen Kettenschutzwand 14, 15 versehen. Die Kettenschutzwände 14, 15 überlappen einander in radialer Richtung und bilden so eine großflächige Labyrinthdichtung für den Innenraum, durch die kaum Verschmutzung eindringen kann. Die Kettenschutzwand 14 der kleineren Halbschale ist dabei auf einem Durchmesser 16 gelegen, der kleiner ist als der Durchmesser, auf dem die ebenfalls kreissegmentförmige äußere Kettenschutzwand 15 der größeren Halbschale liegt. Die äußere Kettenschutzwand 15 bildet die Umfangsfläche U.

In Umfangsrichtung enden die beiden Kettenschutzwände 14, 15 jeweils in Aussparungen 18, 19 für den oberen und unteren Trummschutz 5. Die Aussparungen 18, 19 liegen dabei vorzugsweise an der Position der Halbschalen 7, 8, die sich in axialer Richtung A mit dem Bereich 20 überlappt, in dem die Kette 3 auf das Antriebsritzel 2 aufläuft. In Kettenrichtung K betrachtet, weisen die Aussparungen 18, 19 eine im Wesentlichen rechteckige Kontur auf, die zur Außenkontur des jeweiligen Trummschutzes 5 in Kettenrichtung K komplementär ausgestaltet ist.

Dem Bereich 21, der von der Kette 3 nicht umschlungen ist, ist bei beiden Halbschalen 7, 8 eine Zahnschutzwand 22, 23 zugeordnet, die von den Seitenschutzwänden 12, 13 der Halbschalen 7, 8 kreissegmentförmig in axialer Richtung zum Antriebsritzel 2 hin vorspringt. Die Zahnschutzwände 22, 23 liegen auf denselben Durchmessern 16, 17 wie die jeweiligen Kettenschutzwände 14, 15. Allerdings kann hier in einer weiteren Variante auch die Zahnschutzwand 22 der Halbschale 8 auf einem größeren Durchmesser und die Zahnschutzwand 23 der anderen Halbschale 7 auf einem größeren Durchmesser liegen, so dass einmal die Halbschale 7 und einmal die Halbschale 8 einen Teil der äußeren Umfangsfläche U des fertig montierten Ritzelschutzes 4 bildet. Vorzugsweise überlappen sich auch die Zahnschutzwände 22, 23 in radialer Richtung R unter Bildung einer Labyrinthdichtung.

Am Innenumfang I der äußeren Halbschale 7 ist eine kreisringförmige, in axialer Richtung von der Seitenschutzwand 12 zum Antriebsritzel 2 hin vorspringende Dichtlippe 24 angeordnet, deren Länge in axialer Richtung A kleiner ist als die der Kettenschutzwand 14. Im Betrieb dichtet die Dichtlippe 24 den Innenraum des Ritzelschutzes 4 gegenüber der Seitenfläche 25 des Antriebsritzels 2 ab. Das axiale Ende der Dichtlippe 24 verjüngt sich im Querschnitt zum Antriebsritzel 2 hin vorzugsweise in Form einer Spitze, um das Festsetzen von Verschmutzungen zu vermeiden.

Die dem Fahrrad zugewandte, innere Halbschale 8 weist ebenfalls eine Dichtlippe 26 auf, die entsprechend der Dichtlippe 24 der äußeren Halbschale 7 ausgebildet ist. Im Bereich der Einbuchtung 9, in der die Seitenschutzwand 13 in axialer Richtung zum Antriebsritzel 2 hin verschoben ist, verringert sich jedoch entsprechend die Höhe der Dichtlippe 26 bzw. ist diese nicht mehr vorhanden, so dass eine plane, stets gleich vom Antriebsritzel 2 beabstandete Dichtung entsteht.

Die Kettenschutzwände 14, 15 und die Zahnschutzwände 22, 23 werden von den langen Schenkeln 7a, 8a, die Dichtlippen 24, 26 von den kurzen Schenkeln 7b, 8b der U-förmigen Querschnitte der Halbschalen 7, 8 gebildet.

Bei zusammengesetztem Ritzelschutz 4 bildet sich zwischen den einander gegenüberliegenden Dichtlippen 24, 26 ein Ringspalt, dessen Breite in axialer Richtung größer ist als die Breite des Antriebsritzels 2 in axialer Richtung und kleiner ist als die Breite der Kette 3 in axialer Richtung. Die einander gegenüberliegenden in axialer Richtung weisenden Innenflächen der Halbschalen 7, 8 weisen einen Abstand auf, der größer ist als die Breite der Kette 3.

Zur Versteifung und besseren schwimmenden Lagerung der Halbschalen 7, 8 können diese im Bereich 12 mit einem zwischen der Kettenschutzwand 14, 15 und der Dichtlippe 24, 26 angeordneten, axial vorspringenden und segmentförmig verlaufenden Führungs- und Versteifungssteg 27 versehen sein. Der Steg 27 kann im Bereich der Aussparungen 18, 19 unterbrochen sein und sich auf der anderen Seite der Aussparungen wieder kreissegmentförmig erstrecken, um auch hier die Halbschalen 7, 8 zu versteifen.

Schließlich sind im Bereich der Aussparungen 18, 19 noch axial zum Antriebsritzel 2 vorspringende Gelenkzapfen 28 vorgesehen. Die Höhe der Gelenkzapfen überschreitet vorzugsweise jedoch nicht die Höhe des Versteifungssteges 27.

Der Trummschutz 5 ist ebenfalls aus zwei axial zusammengesteckten Halbschalen 30, 31 mit jeweils U-förmigem Querschnitt aufgebaut. Die eine Halbschale 31 ist dabei in die andere Halbschale 30 einsteckbar. Der obere und der untere Trummschutz 5 sind identisch aufgebaut, der untere Trummschutz ist lediglich in seiner Längsrichtung einmal um 180° gedreht eingebaut. Um eine Verschiebung der beiden Halbschalen 30, 31 des Ritzelschutzes in Längsrichtung, d. h. in Kettenrichtung K zu verhindern, sind Formschlusselemente 32, 33 vorgesehen, die bei zusammengesetztem Trummschutz 5 sich miteinander im Eingriff befinden und die beiden Halbschalen 30, 31 in Längsrichtung verrasten. Vorzugsweise überlappen sich die Halbschalen 7, 8 in der Richtung, in der die Kette 3 auslenkbar ist.

Auch beim Trummschutz ist vorzugsweise vorgesehen, dass sich in Richtung quer zur Kette die ineinander gesteckten Halbschalen 30, 31 im Bereich ihrer Querschnittsschenkel überlappen. Die Wandstärke des Trummschutzes 5 in axialer Richtung sollte bevorzugt höchstens der Höhe der Zapfen 28 entsprechen, so dass der Innenraum des Trummschutzes ohne Querschnittssprung und ohne in den Innenraum ragenden Vorsprünge in den Innenraum des Ritzelschutzes 4 übergeht.

An seinem einen Ende 33 ist der Trummschutz 5 in die Aussparungen 19 für den oberen Trummschutz und 18 für den unteren Trummschutz so eingesetzt, dass seine Außenfläche C tangential und möglichst ohne Stufen in die äußere Umfangsfläche des Ritzelschutzes 4 übergeht. Am Ende 33 sind sich in axialer Richtung vom Antriebsritzel 2 weg öffnende Öffnungen 35 vorgesehen, deren lichter Durchmesser größer ist als der Außendurchmesser der Zapfen 28.

Die Wandstärke des Ritzelschutzes 4 im Bereich der Aussparungen 18, 19 und die Wandstärke am Ende 33 des Trummschutzes 5 ist so verringert, dass sich zusammen die ursprüngliche Wandstärke von Ritzelschutz 4 oder Trummschutz 5 ergibt. Hierzu sind die in axialer Richtung weisenden Flächen der Aufnahmen 18, 19 innen und der Enden 33 außen im Übergangsbereich 6 zurückversetzt.

Bei montiertem Kettenschutz 1 greifen die Zapfen 28 in die Öffnungen 35 ein und bilden eine gelenkige Verbindung zwischen Trummschutz 5 und Ritzelschutz 4. Selbstverständlich sind auch andere Arten einer gelenkigen Verbindung, die vorzugsweise ohne Werkzeug zusammensteckbar ist, möglich.

Das andere Ende 36 des Trummschutzes 5 ist frei und kann vom Benutzer auf beliebige Länge heruntergekürzt werden.

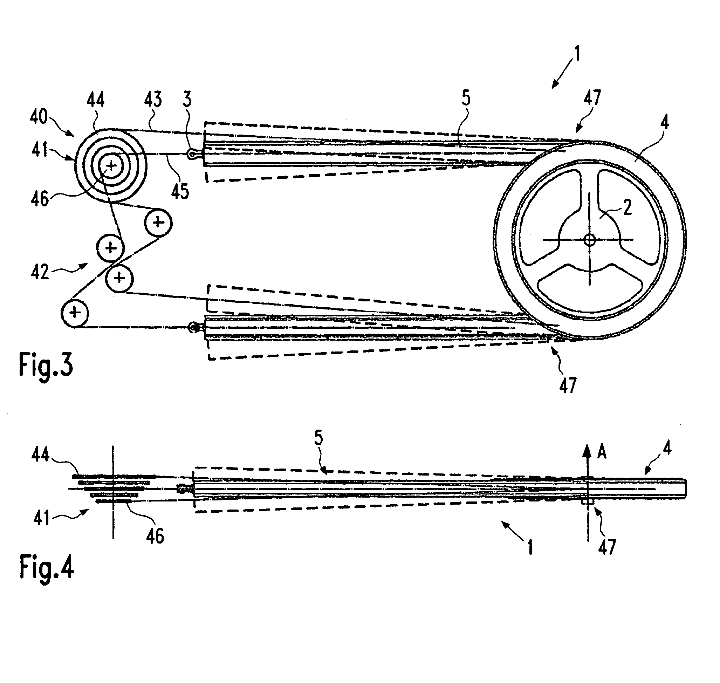

Mit Bezug auf die Fig. 3 und 4 wird nun die Funktion des Kettenschutzes 1 genauer erläutert, wobei für die bereits beschriebenen Elemente die obigen Bezugszeichen wieder verwendet sind.

Fig. 3 zeigt eine schematische Seitenansicht auf einen Kettenschutz 1, der auf einem Antriebsritzel 2 und einer Kette 3, die streckenweise lediglich durch ihre Mittellinie dargestellt ist, selbsthaltend, d.h. ohne Befestigung am Fahrradrahmen, schwimmend, d.h. mit Spiel, und selbstzentrierend montiert ist. Ferner ist in Fig. 3 schematisch eine Kettenschaltung 40 mit einem Zahnkranzpaket 41 und einem Schaltwerk 42 dargestellt.

Mit dem Bezugszeichen 43 ist der Verlauf der Kette 3 über das größte Zahnrad 44 des Zahnkranzpaketes 41 dargestellt. Das Bezugszeichen 45 wird für den Verlauf der Kette 3 über den kleinsten Zahnkranz 46 verwendet. Die unterschiedliche Stellung des Schaltwerkes 42 ist für die beiden unterschiedlichen Kettenverläufe 43, 45 ebenfalls dargestellt.

Wie zu erkennen ist, ändert sich der Verlauf 43, 45 der Kette vom Antriebsritzel 2 weg in Abhängigkeit davon, über welchen Zahnkranz des Zahnkranzpakets die Kette 3 läuft. Läuft sie über den größten Zahnkranz 44, so ist ihr Verlauf 43 gegenüber dem Weg über den kleinsten Zahnkranz 46 am oberen und unteren Kettentrumm nach oben ausgelenkt. Dabei verläuft die Kette 3 stets geradlinig zwischen der Stelle 20 des Antriebsritzels 2 und der Auflaufstelle auf dem jeweiligen Zahnkranz des Zahnkranzpaketes 41. Es ändert sich lediglich der Winkel, in dem die Kette 3 zum Antriebsritzel 2 läuft. Im Übergangsbereich 6 zwischen Trummschutz 5 und Ritzelschutz 4 Ist der Kettenschutz 1 daher mit einer Bewegungszone 47 versehen, deren Auslenkbarkeit gegenüber der Auslenkbarkeit des Trummschutzes 5 erhöht ist. Somit kann der Trummschutz 5 ohne Verformung geradlinig dem Verlauf der Kette folgen, was die Reibkräfte verringert. Die Bewegung zwischen Trummschutz 5 und Ritzelschutz 4 wird nahezu ausschließlich in der Bewegungszone 47 ausgeglichen. Die Bewegungszone 47 überlappt in axialer Richtung mit dem Bereich 20 (vgl. Fig. 2) und kann durch ein Gelenk, insbesondere die gelenkige Verbindung 28, 35 realisiert sein.

Da, wie Fig. 3 zeigt, auch das untere Kettentrumm 5 durch die Bewegung des Schaltwerkes 42 geradlinig nach oben und unten ausgelenkt wird, ist hier wie beim oberen Kettentrumm eine Bewegungszone 47 vorgesehen.

Die Verbindung zwischen Ritzelschutz 4 und Trummschutz 5 weist keine Federelemente auf und erlaubt eine Relativbewegung von Trummschutz und Ritzelschutz nahezu ohne elastische Verformungen, so dass bei der Relativbewegung keine Rückstellkräfte entstehen.

Die Bewegung der Kette 3 findet jedoch nicht ausschließlich in der Ebene des Antriebsritzels 2, sondern auch in einer Richtung senkrecht dazu statt, wie Fig. 4 zeigt. Da die Zahnkränze des Zahnkranzpakets 41 in axialer Richtung A gestaffelt sind, muss der Trummschutz 5 auch einer Bewegung der Kette in axialer Richtung folgen. Dies wird dadurch erreicht, dass die Auslenkbarkeit auch in axialer Richtung in der Bewegungszone 47 konzentriert ist. Der Ritzelschutz 4 bleibt unverformt, während der Trummschutz 5, ebenfalls unverformt, den Bewegungen der Kette folgt. Der Ausgleich der Relativbewegung findet ausschließlich in der Bewegungszone 47 statt.

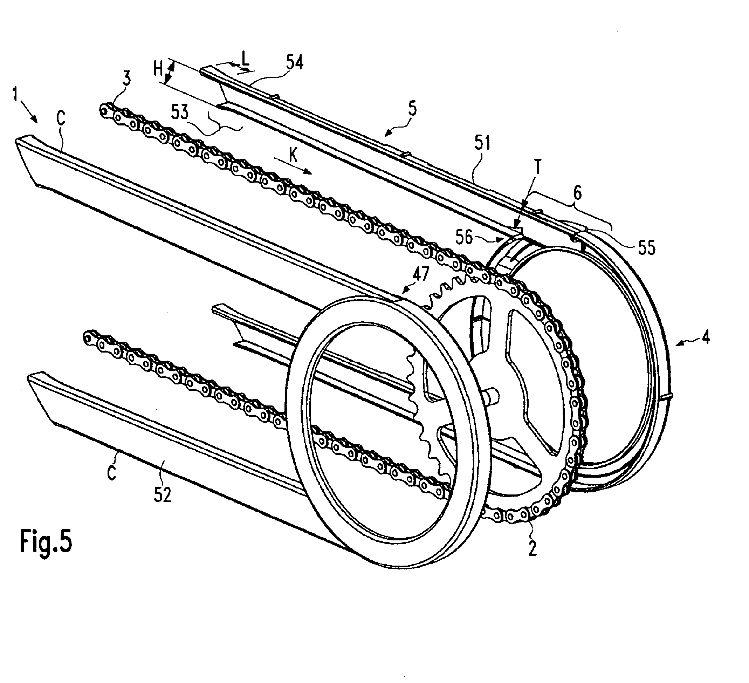

Mit Bezug auf die Figur 5 wird nun eine weitere Ausführungsform des erfindungsgemäßen Kettenschutzes genauer beschrieben. Der Kürze halber wird dabei lediglich auf die Unterschiede zu der oben beschriebenen Ausführungsform eingegangen. Für Elemente, deren Funktion und Aufbau bereits aus der oben beschriebenen Ausführungsform bekannt sind, sind dieselben Bezugszeichen verwendet. Die in den Ausführungsformen unterschiedlichen Elemente können beliebig miteinander kombiniert werden.

Im Unterschied zu der Ausführungsform der Figuren 1 bis 4 ist die in der Figur 5 gezeigte Ausführungsform mit Hilfe eines Zweikomponenten-Spritzverfahrens hergestellt, so dass die Halbschale 30 des wenigstens einen Trummschutzes (vgl. Figur 2) und die Halbschale 7 des Ritzelschutzes zu einer gemeinsamen, einteiligen Halbschale 50 integriert sind. Entsprechend sind die Halbschalen 31 und 8 in eine einzige Halbschale 51 zusammengefasst. Die Halbschalen 50, 51 werden, wie bei der vorausgegangenen Ausführungsform, in axialer Richtung zusammengesetzt.

Bei der Fertigung werden zwei oder auch mehrere unterschiedliche Kunststoffe mit unterschiedlichen Materialeigenschaften gleichzeitig oder in mehreren aufeinanderfolgenden Arbeitsschritten zu der jeweiligen Halbschale 50, 51 geformt. So kann beispielsweise die Bewegungszone 47 bzw. der Übergangsbereich 6 aus einem Kunststoff gefertigt sein, der weicher bzw. flexibler und damit leichter auslenkbar ist als der für den Ritzelschutz 4 verwendete Kunststoff. Insbesondere kann die Shore-Härte im Übergangsbereich etwa 70 bis 80 Shore A betragen, während die Shore-Härte des Ritzelschutzes etwa 30 bis 40 Shore D beträgt. Um die Laufgeräusche zu verringern, kann der gesamte Trummschutz aus dem Material des Übergangsbereichs 6 gefertigt sein.

In dem zum Zahnkranzpaket 41 weisenden Endbereich 52 kann der Trummschutz 5 einen sich in Richtung weg vom Ritzelschutz 4 erweiternden Einlaufbereich 53 ausbilden. Die Länge L des Einlaufbereiches beträgt in etwa das Ein- bis Zweifache der in der Ebene des Antriebsritzels 2 gemessenen lichten Höhe des Einlaufbereiches 53. Von der Stelle 54 der niedrigsten lichten Höhe des Trummschutzes 5 erweitert sich die lichte Höhe wieder hin zum Ritzelschutz 2. Die lichte Höhe T im Übergangsbereich des Trummschutzes 5 entspricht in etwa der lichten Höhe H. Sie kann insbesondere etwa zwei bis zehn Millimeter, vorzugsweise etwa sieben bis neun Millimeter größer als die lichte Höhe an der engsten Stelle 54 sein. Vorzugsweise verlaufen die beiden Oberseiten C des Trummschutzes bis auf den Einlaufbereich 53 parallel zueinander, so dass sich die Verjüngung zwischen der engsten Stelle 54 und dem Übergangsbereich 6 in einem schräg zueinander gerichteten Verlauf der aufeinander zuweisenden Seiten des Trummschutzes 5 niederschlägt.

Neben der Verwendung eines flexibleren Materials im Übergangsbereich 6 führt zu einer erhöhten Auslenkbarkeit auch die wenigstens in diesem Bereich vorhandene verringerte Wandstärke und/oder eine Abstufung 55 sowie eine Kante 56, welche aufgrund ihrer Kerbwirkung die Spannung in diesen Bereichen erhöhen und somit an diesen Stellen die Verformung des Kettenschutzes 1 konzentrieren. Der Kettenschutz kann also auch in der lediglich aus zwei Halbschalen bestehenden Ausgestaltung den Bewegungen der Kette 3 beim Schalten mittels eines Schaltwerkes am Hinterrad folgen. Bei entsprechender Querschnittsreduzierung im Übergangsbereich und einer entsprechenden Formgebung, beispielsweise durch Rippen und Kanten, welche die bei der Folgebewegung des Trummschutzes 5 erzeugten Spannungen auf einen geringeren Spannungsquerschnitt reduzieren, können der Trummschutz 5 und der Ritzelschutz 4 auch aus einem einheitlichen Material gefertigt sein. Allerdings müssen bei dieser Ausgestaltung unter Umständen Kompromisse bei der Geräuschentwicklung im Betrieb und in der Steifigkeit des Ritzelschutzes 4 in Kauf genommen werden. Anstelle der in Fig. 5 mit zweifachem Trummschutz 5 versehenen Ausführungsform kann auch lediglich ein einzelner Trummschutz 5 vorzugsweise für das obere Kettentrumm einstückig an der jeweiligen Halbschale 50, 51 angeformt sein. Ferner können der obere und untere Trummschutz 5 unterschiedlich lang sein. So kann ein Trummschutz lediglich als Stummel an der jeweiligen Halbschale 50, 51 vorhanden sein.

## Patentansprüche

1. Kettenschutz (1) für ein Fahrrad mit einem Antriebsritzel (2) und einer das Antriebsritzel wenigstens teilweise umschlingenden Kette (3), wobei der Kettenschutz stationär gegenüber dem Fahrrad und schwimmend sowie selbsthaltend auf der Kette und/oder dem Antriebsritzel anbringbar ausgestaltet ist und wenigstens einen das Antriebsritzel wenigstens teilweise umgebenden Ritzelschutz (4) und wenigstens einen, wenigstens ein Kettentrumm umgebenden und mit dem Ritzelschutz verbundenen Trummschutz (5) aufweist, **dadurch gekennzeichnet, dass** im Übergangsbereich (6) im Trummschutz und Ritzelschutz eine Bewegungszone (47) vorgesehen ist, deren Auslenkbarkeit gegenüber einer Bewegung der Kette (3) quer zur Kettenrichtung (K) größer ist als die Auslenkbarkeit des Trummschutzes (5) und des Ritzelschutzes (4).

2. Kettenschutz (1) nach Anspruch 1, **dadurch gekennzeichnet, dass** der Trummschutz (5) und der Ritzelschutz (4) in der Bewegungszone (47) gelenkig miteinander verbunden sind.

3. Kettenschutz (1) nach Anspruch 1 oder 2, **dadurch gekennzeichnet, dass** der Trummschutz (5) und der Ritzelschutz (4) einstückig miteinander verbunden sind.

4. Kettenschutz (1) nach einem der Ansprüche 1 bis 3, **dadurch gekennzeichnet, dass** der Übergangsbereich (6) sich in axialer Richtung (A) mit einem Bereich (20) überlappt, in dem die Kette (3) auf das Antriebsritzel (2) aufläuft.

5. Kettenschutz (1) nach einem der Ansprüche 1 bis 4, **dadurch gekennzeichnet, dass** die gelenkige Verbindung zwischen Trummschutz (5) und Ritzelschutz (4) durch wenigstens einen beweglich in eine Öffnung (35) einsteckbare Zapfen (28) erfolgt.

6. Kettenschutz (1) nach einem der Ansprüche 1 oder 5, **dadurch gekennzeichnet, dass** der Trummschutz (5) in etwa tangential in den Ritzelschutz (4) mündet.

7. Kettenschutz (1) nach einem der Ansprüche 1 bis 6, **dadurch gekennzeichnet, dass** die äußere Umfangsfläche (U) des Ritzelschutzes (4) und die Außenfläche (C) des Trummschutzes (5) im Wesentlichen sprungfrei ineinander übergehen.

8. Kettenschutz (1) nach einem der Ansprüche 1 bis 7, **dadurch gekennzeichnet, dass** der Trummschutz (5) sich im Übergangsbereich (6) mit dem Ritzelschutz (4) wenigstens abschnittsweise überlappt.

9. Kettenschutz (1) nach einem der Ansprüche 1 bis 8, **dadurch gekennzeichnet, dass** der Ritzelschutz (4) wenigstens aus zwei im Wesentlichen axial zusammensteckbaren, kreisringförmigen Halbschalen (7, 8) zusammengesetzt ist.

10. Kettenschutz (1) nach einem der Ansprüche 1 bis 9, **dadurch gekennzeichnet, dass** sich die Halbschalen (7, 8) in radialer Richtung (R) wenigstens abschnittsweise überlappen.

11. Kettenschutz (1) nach einem der Ansprüche 1 bis 9, **dadurch gekennzeichnet, dass** der Ritzelschutz (4) wenigstens eine Aussparung (18, 19) aufweist, in der der Trummschutz (5) aufnehmbar ist, und dass im Bereich der Aussparung die Wandstärke des Ritzelschutzes (4) verringert ist.

12. Kettenschutz (1) nach einem der Ansprüche 1 bis 11, **dadurch gekennzeichnet, dass** die Innenquerschnitte von Trummschutz (5) und Ritzelschutz (4) im Wesentlichen stoßfrei ineinander übergehen.

13. Kettenschutz (1) nach einem der Ansprüche 1 bis 12, **dadurch gekennzeichnet, dass** der Trummschutz (5) wenigstens zwei in axialer Richtung (A) zusammensetzbare Halbschalen (7, 8) mit jeweils einem in radialer Richtung zumindest abschnittsweise im Wesentlichen U-förmigen Querschnitt aufweist.

14. Kettenschutz (1) nach einem der Ansprüche 1 bis 12, **dadurch gekennzeichnet, dass** der Trummschutz (5) wenigstens zwei in axialer Richtung (A) des Antriebsritzels (2) zusammensetzbare Halbschalen (30, 31) aufweist, die durch miteinander in Eingriff bringbare Formschlusselemente (32, 33) in Kettenrichtung (K) verschiebegesichert zusammensetzbar ausgestaltet sind.

15. Kettenschutz (1) nach einem der Ansprüche 1 bis 14, **dadurch gekennzeichnet, dass** der Trummschutz (5) einen quer zur Kettenrichtung (K) geschlossenen Kanal bildet.

16. Kettenschutz (1) nach einem der Ansprüche 1 bis 15, **dadurch gekennzeichnet, dass** der Ritzelschutz (4) im Bereich (12) der Umschlingung des Antriebsritzels (2) durch die Kette (3) wenigstens zwei axial einander gegenüberliegende Versteifungs- und Führungsstege (27) aufweist.

17. Kettenschutz (1) nach einem der Ansprüche 1 bis 16, **dadurch gekennzeichnet, dass** der Ritzelschutz (4) an seiner inneren Umfangsfläche (I) eine radiale Ringöffnung (O) aufweist, deren axiale Breite größer als die axiale des Antriebsritzels (2) und kleiner als die axiale Seite der Kette (3) ist und die von in axialer Richtung (A) sich zur Ringöffnung (O) hin verjüngenden Dichtlippen (24) begrenzt ist.

18. Kettenschutz (1) nach einem der Ansprüche 1 bis 17, **dadurch gekennzeichnet, dass** ein zweiter Trummschutz (5) vorgesehen ist, identisch zum ersten Trummschutz (5) ausgestaltet und ebenfalls am Ritzelschutz (4) befestigt ist.

19. Kettenschutz (1) nach einem der Ansprüche 1 bis 18, **dadurch gekennzeichnet, dass** der Kettenschutz (1) ohne Federvorspannung auf der Kette (3) und/oder dem Antriebsritzel (2) schwimmend gelagert ist.

20. Kettenschutz (1) nach einem der Ansprüche 1 bis 19, **dadurch gekennzeichnet, dass** er aus zwei in axialer Richtung (A) zusammensetzbaren Halbschalen (50, 51) aufgebaut ist, in die jeweils eine Halbschale für den Ritzelschutz (4) und für den Trummschutz (5) integriert ist.

21. Kettenschutz (1) nach Anspruch 20, **dadurch gekennzeichnet, dass** die Halbschalen (50, 51) jeweils aus wenigstens zwei verschiedenen Kunststoffen gefertigt sind.

22. Kettenschutz (1) nach einem der Ansprüche 1 bis 21, **dadurch gekennzeichnet, dass** der Trummschutz (5) ein sich in Richtung weg vom Ritzelschutz (4) weitenden Einlaufbereich (53) aufweist.

## Claims

1. Chain guard (1) for a bicycle comprising a driving pinion (2) and a chain (3) which winds around the driving pinion at least in part, the chain guard being configured so as to be stationary with respect to the bicycle and to be applicable to the chain and/or to the driving pinion in a floating and self-retaining manner, and having at least one pinion guard (4) which encloses the driving pinion at least in part and at least one run guard (5) which encloses at least one chain run and is connected to the pinion guard, **characterised in that**, in the transition region (6), a movement zone (47) is provided in the run guard and pinion guard, the deflection capacity of said movement zone being greater with respect to a movement of the chain (3) which is transverse to the chain direction (K) than the deflection capacity of the run guard (5) and of the pinion guard (4).

2. Chain guard (1) according to claim 1, **characterised in that** the run guard (5) and the pinion guard (4) are hingedly interconnected in the movement zone (47).

3. Chain guard (1) according to either claim 1 or claim 2, **characterised in that** the run guard (5) and the pinion guard (4) are integrally interconnected.

4. Chain guard (1) according to any of claims 1 to 3, **characterised in that**, in the axial direction (A), the transition region (6) overlaps a region (20) in which the chain (3) strikes the drive pinion (2).

5. Chain guard (1) according to any of claims 1 to 4, **characterised in that** the hinged connection between the run guard (5) and pinion guard (4) is achieved by at least one pin (28) which is movably inserted in an opening (35).

6. Chain guard (1) according to either claim 1 or claim 5, **characterised in that** the run guard (5) leads into the pinion guard (4) in a substantially tangential manner.

7. Chain guard (1) according to any of claims 1 to 6, **characterised in that** the outer circumferential surface (U) of the pinion guard (4) and the outer surface (C) of the run guard (5) transition into one another substantially without interruption.

8. Chain guard (1) according to any of claims 1 to 7, **characterised in that**, in the transition region (6), the run guard (5) overlaps the pinion guard (4) at least in some portions.

9. Chain guard (1) according to any of claims 1 to 8, **characterised in that** the pinion guard (4) is assembled from at least two annulus-shaped half shells (7, 8) which can be assembled in a substantially axial manner.

10. Chain guard (1) according to any of claims 1 to 9, **characterised in that** the half shells (7, 8) overlap in a radial direction (R) at least in some portions.

11. Chain guard (1) according to any of claims 1 to 9, **characterised in that** the pinion guard (4) has at least one recess (18, 19) capable of accommodating the run guard (5), and **in that** the wall thickness of the pinion guard (4) is reduced in the region of the recess.

12. Chain guard (1) according to any of claims 1 to 11, **characterised in that** the inner cross-sections of the run guard (5) and pinion guard (4) transition into one another in a substantially smooth manner.

13. Chain guard (1) according to any of claims 1 to 12, **characterised in that** the run guard (5) has at least two half shells (7, 8) which can be assembled in the axial direction (A) and each comprise a cross-section which is substantially U-shaped at least in some portions in the radial direction.

14. Chain guard (1) according to any of claims 1 to 12, **characterised in that** the run guard (5) has at least two half shells (30, 31) which can be assembled in the axial direction (A) of the driving pinion (2) and which are configured such that they can be assembled so as to be secured against displacement in the chain direction (K) by positive-locking elements (32, 33) which can be brought into mutual engagement.

15. Chain guard (1) according to any of claims 1 to 14, **characterised in that** the run guard (5) forms a channel which is closed transversely to the chain direction (K).

16. Chain guard (1) according to any of claims 1 to 15, **characterised in that** the pinion guard (4) has at least two reinforcement and guidance webs (27) which are axially mutually opposed in the region (12) at which the chain (3) winds round the driving pinion (2).

17. Chain guard (1) according to any of claims 1 to 16, **characterised in that** the pinion guard (4) has a radial ring opening (O) at its inner circumferential surface (I), the axial width of which ring opening is greater than the axial width of the driving pinion (2) and smaller than the axial side of the chain (3) and which is defined by sealing lips (24) which taper in the axial direction (A) towards the ring opening (O).

18. Chain guard (1) according to any of claims 1 to 17, **characterised in that** a second run guard (5) is provided, configured identically to the first run guard (5) and likewise fixed to the pinion guard (4).

19. Chain guard (1) according to any of claims 1 to 18, **characterised in that** the chain guard (1) is floatably mounted without spring tension on the chain (3) and/or the driving pinion (2).

20. Chain guard (1) according to any of claims 1 to 19, **characterised in that** it is constructed from two half shells (50, 51) which can be assembled in the axial direction (A), into each of which a half shell is integrated for the pinion guard (4) and for the run guard (5).

21. Chain guard (1) according to claim 20, **characterised in that** the half shells (50, 51) are each produced from at least two different plastics materials.

22. Chain guard (1) according to any of claims 1 to 21, **characterised in that** the run guard (5) has a feed region (53) which extends away from the pinion guard (4).

## Revendications

1. Protection de chaîne (1) pour une bicyclette avec un pignon d'entraînement (2) et une chaîne (3) qui s'enroule au moins en partie sur le pignon, étant précisé que la protection de chaîne est conçue pour pouvoir être installée de manière stationnaire par rapport à la bicyclette et flottante et autoportante sur la chaîne et/ou sur le pignon, et comporte au moins une protection de pignon (4) qui entoure au moins en partie le pignon, et au moins une protection de brin (5) qui entoure au moins un brin de chaîne et qui est reliée à la protection de pignon, **caractérisée en ce que** dans la zone de transition (6), il est prévu dans la protection de brin et dans la protection de pignon une zone de mouvement (47) dont la capacité de déviation par rapport au mouvement de la chaîne (3) transversalement par rapport au sens de chaîne (K) est plus grande que celle de la protection de brin (5) et de la protection de pignon (4).

2. Protection de chaîne (1) selon la revendication 1, **caractérisée en ce que** la protection de brin (5) et la protection de pignon (4) sont reliées entre elles de manière articulée dans la zone de mouvement (47).

3. Protection de chaîne (1) selon la revendication 1 ou 2, **caractérisée en ce que** la protection de brin (5) et la protection de pignon (4) sont reliées d'une seule pièce.

4. Protection de chaîne (1) selon l'une des revendications 1 à 3, **caractérisée en ce que** la zone de transition (6) recouvre dans le sens axial (A) une zone (20) dans laquelle la chaîne (3) arrive sur le pignon d'entraînement (2).

5. Protection de chaîne (1) selon l'une des revendications 1 à 4, **caractérisée en ce que** la liaison articulée entre la protection de brin (5) et la protection de pignon (4) se fait grâce à au moins un tourillon (28) apte à être introduit, mobile, dans une ouverture (35).

6. Protection de chaîne (1) selon l'une des revendications 1 à 5, **caractérisée en ce que** la protection de brin (5) débouche à peu près tangentiellement dans la protection de pignon (4).

7. Protection de chaîne (1) selon l'une des revendications 1 à 6, **caractérisée en ce que** la surface circonférentielle extérieure (U) de la protection de pignon (4) et la surface extérieure (C) de la protection de brin (5) se prolongent l'une l'autre globalement sans interruption.

8. Protection de chaîne (1) selon l'une des revendications 1 à 7, **caractérisée en ce que** la protection de brin (5) recouvre au moins par zones la protection de pignon (4), dans la zone de transition (6).

9. Protection de chaîne (1) selon l'une des revendications 1 à 8, **caractérisée en ce que** la protection de pignon (4) se compose d'au moins deux demi-coques en forme de couronnes (7, 8) aptes à être emboîtées globalement axialement.

10. Protection de chaîne (1) selon l'une des revendications 1 à 9, **caractérisée en ce que** les demi-coques (7, 8) se recouvrent au moins par zones dans le sens radial (R).

11. Protection de chaîne (1) selon l'une des revendications 1 à 9, **caractérisée en ce que** la protection de pignon (4) présente au moins un évidement (18, 19) dans lequel la protection de brin (5) peut être logée, et **en ce que** dans la zone de cet évidement, l'épaisseur de paroi de la protection de pignon (4) est réduite.

12. Protection de chaîne (1) selon l'une des revendications 1 à 11, **caractérisée en ce que** les sections transversales intérieures de la protection de brin (5) et de la protection de pignon (4) se prolongent l'une l'autre globalement sans jointure.

13. Protection de chaîne (1) selon l'une des revendications 1 à 12, **caractérisée en ce que** la protection de brin (5) comporte au moins deux demi-coques (7, 8) aptes à être assemblées dans le sens axial (A), avec chacune une section transversale globalement en U au moins par zones, dans le sens radial.

14. Protection de chaîne (1) selon l'une des revendications 1 à 12, **caractérisée en ce que** la protection de brin (5) comporte au moins deux demi-coques (30, 31) qui sont aptes à être assemblées dans le sens axial (A) du pignon d'entraînement (2) et qui sont conçues pour pouvoir être assemblées, fixes dans le sens de chaîne (K), grâce à des éléments à complémentarité de forme (32, 33) aptes à être accouplés.

15. Protection de chaîne (1) selon l'une des revendications 1 à 14, **caractérisée en ce que** la protection de brin (5) forme un conduit fermé transversalement par rapport au sens de chaîne (K).

16. Protection de chaîne (1) selon l'une des revendications 1 à 15, **caractérisée en ce que** la protection de pignon (4) présente, dans la zone (12) où la chaîne (3) s'enroule sur le pignon d'entraînement (2), au moins deux nervures de renforcement et de guidage (27) qui se font face axialement.

17. Protection de chaîne (1) selon l'une des revendications 1 à 16, **caractérisée en ce que** la protection de pignon (4) présente sur sa surface circonférentielle intérieure (I) une ouverture annulaire radiale (O) dont la largeur axiale est plus grande que le côté axial du pignon (2) et plus petite que le côté axial de la chaîne (3) et qui est délimitée par des lèvres d'étanchéité (24) qui vont en rétrécissant dans le sens axial (A) vers ladite ouverture annulaire (O).

18. Protection de chaîne (1) selon l'une des revendications 1 à 17, **caractérisée en ce qu'**il est prévu une seconde protection de brin (5) qui est identique à la première protection de brin (5) et qui est fixée elle aussi à la protection de pignon (4).

19. Protection de chaîne (1) selon l'une des revendications 1 à 18, **caractérisée en ce que** la protection de chaîne (1) est montée flottante, sans précontrainte élastique, sur la chaîne (3) et/ou le pignon d'entraînement (2).

20. Protection de chaîne (1) selon l'une des revendications 1 à 19, **caractérisée en ce qu'**elle se compose de deux demi-coques (50, 51) aptes à être assemblées dans le sens axial (A) et dans lesquelles sont intégrées des demi-coques respectives pour la protection de pignon (4) et pour la protection de brin (5).

21. Protection de chaîne (1) selon la revendication 20, **caractérisée en ce que** les demi-coques (50, 51) sont fabriquées chacune à partir d'au moins deux matières plastiques différentes.

22. Protection de chaîne (1) selon l'une des revendications 1 à 21, **caractérisée en ce que** la protection de chaîne (5) présente une zone d'entrée (53) qui va en s'élargissant à l'opposé de 1 protection de pignon (4).
